# EUROPEAN PATENT SPECIFICATION

(11) **EP 3 359 821 B1**
(45) Date of publication and mention of the grant of the patent: **27.01.2021**
(21) Application number: 15905922.9
(22) Date of filing: 06.10.2015
(51) Int. Cl.: F04D 29/28, F04D 29/30

(54) **FAN ASSEMBLY COMPRISING FAN WHEEL WITH INLET AND OUTLET OF EQUAL CROSS SECTION AREA**
LÜFTERANORDNUNG MIT GEBLÄSE MIT EINLASS UND AUSLASS MIT GLEICHER QUERSCHNITTSFLÄCHE
ENSEMBLE VENTILATEUR COMPORTANT UNE ROUE DE VENTILATEUR AYANT UNE ENTRÉE ET UNE SORTIE DE SURFACES DE SECTION TRANSVERSALE ÉGALES

(43) Date of publication of application: 15.08.2018
(73) Proprietor: Nordic Heater AB, 196 37 Kungsängen (SE)
(72) Inventor: MELIN, Thomas, S-196 37 Kungsängen (SE); DRUGGE, Bengt-Olof, S-983 31 Malmberget (SE); TURESSON, Bert, S-196 33 Kungsängen (SE)
(74) Representative: AWA Sweden AB
(86) International application number: PCT/SE2015/051055
(87) International publication number: WO 2017/061912

(56) References cited:
- EP-B1- 2 324 249
- WO-A1-00/57064
- DE-C1- 4 025 662
- US-A- 3 788 765
- US-A- 3 829 250
- US-A- 3 829 250
- US-A- 4 231 706
- US-A- 5 741 123
- US-A- 5 741 123
- US-A1- 2003 002 986
- US-A1- 2004 219 013
- US-A1- 2014 064 947

## Description

### Technical field

The present invention generally relates to the field of fans and in particularly discloses a fan assembly comprising a fan wheel arranged in a fan duct, a heater for heating of airplanes comprising such an assembly and a use of such an assembly in a heater for heating, cooling and/or ventilation of airplanes.

### Technical background

Fans are used to create a flow of for example air. In order to create the flow, fans comprise rotating wings acting on the air, commonly the wings are arranged in a housing.

In the field, different configurations of fans are utilized in order to achieve a desired behaviour for example in terms of speed of the generated flow of air.

One particular type of fan is the centrifugal fan. Centrifugal fans commonly comprise a fan wheel creating a flow of air from an inlet at an inner radius of the fan wheel and further causing the flow of air flow to move outwardly towards a fan wheel outlet at the outer radius. In such fans, the number of fan wings, or blades, as well as the design of the fan wings for example in terms of the shape of the wings are important parameters in order to improve the performance of the fan.

Numerous types of wing designs are known in the art. Depending on the application different characteristics of the flow of air and/or the fan are desired, and hence different types of wing designs are used. Examples of parameters to consider include high or low speed of flow, high or low air pressure, sensitivity to particles, noise levels etc. However, one common desire for most applications is to reduce energy consumption, i.e. to achieve an efficiency as high as possible.

A known fan is shown for example in US 3 829 250 A.

It is also known to utilize fans within the aviation industry, for handling, and management of air in different applications such as the air in compartments of air crafts and the air in hangars. For example, fans may be utilized for heating, cooling and/or ventilation of compartments of air crafts. In cases wherein the fan is utilized for heating a compartment of for example an airplane, the fan is commonly combined with at heat source such that a heated flow of air may be created. One example include portable heaters used for heating airplanes, in such application great demands are placed on capability of delivering high volumes of heated air in short time. However, the process of supplying heated air is even more energy consuming and therefore there is an even greater demand for high speeds and yet improved efficiency for such applications.

### Summary of the invention

Accordingly, it would be desirable to provide an improved fan assembly compared to the above described prior art. In particular, it would be advantageous to increase the efficiency of such a fan assembly while at the same time reducing noise from the fan assembly. To better address one or more of these concerns, a fan assembly and a heater comprising such an assembly as defined in the independent claims are provided. Preferred embodiments are defined in the dependent claims.

According to a first aspect of the invention a fan assembly comprising a fan wheel rotatably arranged around an axis A in a fan duct is provided. The fan wheel comprises a first side, the first side comprising an inner periphery, and an outer periphery, a second side, the second side comprising an inner periphery forming a fan wheel inlet, and an outer periphery, at least four curved wings, the at least four wings extending between the inner and outer periphery of the second side and the at least four wings extending between the first side and the second side, such that channels are formed between the wings and the first and second side. The channels comprising an inlet, arranged at the inner periphery of the second side and having a first cross sectional area, and an outlet, arranged at the outer periphery of the second side and having a second cross sectional area. Wherein the inner periphery of the second side is arranged at a first distance Hᵢ along the axis A from the first side and the outer periphery of the second side is arranged at a second distance Hₒ along the axis A from the first side, such that the cross sectional area of the channels at the inlet and the cross sectional area of the channels at the outlet are substantially equal.

According to the first aspect, the assembly provides an inventive solution to the concerns described above derived from the realization that the desired effect may be provided by a design incorporating a fan wheel comprising channels, wherein the cross sectional area of the channels at the inlet of the channels and the cross section area of the channels at the outlet are substantially equal. Hereby, i.e. by designing the device such that the inlet and the outlet of the respective channel are substantially equal, surprisingly, it has been shown that the efficiency of the fan is significantly increased, while noise levels are significantly reduced. Accordingly, advantages of the invention include a reduction of the energy consumption of the fan assembly and an improvement in the surroundings, such as the working environment, of the fan assembly.

The design yielding substantially the same inlet- and outlet area of the channels is achieved by means of the difference in the distance between the first and second side of the fan wheel at the inner and outer periphery respectively, i.e. the design wherein the inner periphery of the second side is arranged at a first distance Hᵢ along the axis A from the first side and the outer periphery of the second side is arranged at a second distance Hₒ along the axis A from the first side. Hereby, for example, a difference in distance, or length, of the channel inlet along the inner periphery as compared to a distance, or length, of the outlet along the larger outer periphery, may be compensated for, thereby achieving the substantially equal inlet area and outlet area of the channel.

In one embodiment, the first and second distances are chosen such that the ratio between the distances Hᵢ and H_{y} is proportional to the ratio between the length of the inner and the outer periphery. In one embodiment, the first and second distances are chosen such that a compensating effect, taking into account the "loss" of channel area along the peripheries due to any extension, or width, of the wings is achieved. In one embodiment, the second side comprise an outer and an inner side, wherein the distance between the outer side and the first side is constant and the distance between the inner side and the first side is variable. In yet one embodiment the first side is a substantially flat side, whereas the second side is inclined, or sloped, between the inner and outer periphery. In one embodiment, the second side may be described as comprising a flat funnel shape.

The curved wings, or blades, are arranged such that channels are formed between the first side, the second side, and the wings. In one embodiment, the first and/or the second side comprise apertures, or slots, in which the wings may be arranged. In one embodiment the wings are fixedly attached to the first and second side, for example by welding. In one embodiment, the first and second side and the at least four wings may be provide as a uniform, one piece, component. Such a component may for example be casted or moulded.

The size of the first and second side, as well as the number and size of the wings, or blades, may be adapted to suit different applications. In one embodiment, the number of wings lies in the interval between 4-30 wings. A higher number of wings yield a higher pressure in the air flow, hence for application wherein higher pressure levels are requires, a higher number of wings is commonly used.

The first and second side may comprise a circular, or annular shape. Such an annular shape, which may be described in terms on a respective inner and outer radius of the first and second side may in some embodiments be substantially equal between the first and second side. In some embodiment the respective inner and outer radiuses of the first and second side are different. Other shapes may be contemplated.

Depending on the application, suitable materials for the fan assembly include metals, for example steel or aluminium, plastics or ceramics.

The fan wheel inlet is formed at the inner periphery of the second side. According to one embodiment, the area of the inlet is substantially equal to the total area of the inlet of the channels, i.e. the combined total area of all channel inlets. Accordingly, in one embodiment, the area of the fan inlet may correspond substantially to total inlet area of the channels, which in turns corresponds to the total outlet area of the channels. In other words, a substantially constant cross sectional area may be maintained throughout the flow path.

According to one embodiment, the first distance Hᵢ between the inner periphery of the second side and the first side is larger than the second distance Hₒ between the outer periphery of the second side and the first side. This is advantageous when the distance, or length, of the channel inlet along the inner periphery is shorter than the distance, or length, of the channel along the outer periphery, since the longer distance Hi compensates for the difference in length thereby achieving the substantially equal inlet area and outlet area of the channel. This is for example the case for en embodiment wherein the first and second side are substantially circular, or annular, i.e. comprising an inner and a outer radius respectively.

In one embodiment, the first and second distances are chosen such that the ratio between the distances Hᵢ and H_{y} is proportional to the ratio between the radius of the inner and the outer periphery of the first and/or the second side.

According to one embodiment, the wings extend between said inner and outer periphery, such that a straight line extending in a radial direction from the axis A to any point on the outer periphery intersects at least one wing. In other words, the wings are curved such that an overlap exists between the wings.

According to one embodiment, a respective cross sectional area along the channels is substantially constant. I.e., each channel comprises a substantially constant cross sectional area along the extension of the respective channel. Such a design is advantageous both in terms of properties of flow as well as for facilitating manufacturing. In one embodiment, the distance between the first and the second side is adapted to decrease between the inner and the outer periphery such that a constant cross section of each channel is achieved.

According to one embodiment, the wings extend between said inner and outer periphery along a curve and comprise a constant width along an axis W perpendicular to the curve. The width may further be understood as a width over a cross section of the wings in a plane parallel to said first side. The constant width of the wings along the curve may be chosen such that a suitable balance between channel volume and hence fan capacity and durability is achieved. A constant width of the wings is advantageous for example in a case wherein the distances Hi and Ho are chosen to compensate for the channel area occupied by the extension of the wings, wherein a constant width of the wings along the curve of extension makes the adaption easier to perform. In one embodiment, the wings comprise a variable width along the curve.

According to one embodiment, an angle α defined between a first end portion of a wing, facing the inner periphery, and a tangent to the inner periphery, is within the range between 20°-45°, preferably within the range between 35°-45°, The angle may further be described as an angle between a line of extension of the wing, and a tangent to the inner periphery. The angle, also known in the art as the angle of attack, may be chosen to vary the amount of flow through the channels and hence the fan.

According to one embodiment, an angle β defined between a second end portion of a wing, facing the outer periphery, and a tangent to the outer periphery, is within the range between 2°-10°, preferably within the range between 4°-6°The angle may further be described as an angle between a line of extension of the wing, and a tangent to the inner periphery.

According to one embodiment, the wings are curved such that a curvature of a first portion of the wing, said first portion being arranged more adjacent, or closer, to the inner peripheries of the first and second side than a second portion, is larger than the curvature of the second portion of the wing, said second portion being arranged more adjacent, or closer, to the outer peripheries of said first and second side than the first portion.

According to one embodiment, the fan duct comprises an inlet and an outlet, wherein the inlet of said fan duct is defined between said outer periphery of said first side and said outer periphery of said second side. In other words, the inlet of the duct is defined by the outlet of the wheel, such that the flow of air from the wheel is transferred into the duct at the portion of the assembly where the fan wheel may be described as transitioning into the inlet of the fan duct.

According to one embodiment, the area of the inlet of the fan duct is substantially equal to the total outlet area of the at least four channels. In such an embodiment, an advantageous smooth transition of the flow from the wheel to the duct may be achieved without unnecessary pressure fluctuations.

According to one embodiment, the inlet of the fan duct is arranged to encircle the fan wheel. Such an arrangement allows for the direction of the flow to be diverted by the fan duct. In one embodiment, the direction of the flow of air is diverted from an initial radial direction as defined by the radius of the fan wheel to a tangential direction as defined by the tangent of the fan wheel. In such an embodiment, the fan duct may be described as a volute. In one embodiment, the direction of flow at the outlet of the duct is substantially perpendicular to the direction of flow at the inlet of the fan wheel. In one embodiment, the direction of the flow of air at the outlet of the duct is substantially perpendicular to the direction of the axis A.

In one embodiment, the fan duct comprises a substantially circular cross section. In one embodiment, an axis B is defined along the direction of the outlet of the fan duct, i.e. normal to a plan defined by the outlet of the fan duct.

According to one embodiment, the inlet of the fan duct encircles the fan wheel starting at a point P1 on the outer periphery and ending at a point P2 on the outer periphery, wherein point P2 is angularly offset approximately 360° with respect to point P1, and wherein the extension of the fan duct in a radial direction of the fan wheel, is substantially zero at the point P1 of the fan duct and progressively increases around the fan wheel to be substantially equal to the width across the outlet of the fan duct at point P2. In such an embodiment, the area of the duct progressively increases along the circumvention, or revolution, along the fan wheel.

In one embodiment, the fan duct may be arranged such that an overlap is formed between a first end, i.e. corresponding to point P1 above, and the second point P2. In other words, the angular offset between point P1 and P2 may in some embodiment be more than 360°. In some embodiments, the angular offset may be less than 360°. The width across the outlet of the duct, may be a width defined in a plane to which the axis A is normal. In one embodiment the width across the outlet of the duct is a radius of the outlet.

In one embodiment, at the point P1, the extension of the duct in a radial direction of the wheel is approximately zero and at the point P2, the extension of the fan duct is equal to an extension, or width, E, wherein E is larger than 0. The distance E may in some embodiments be smaller than the width, or the diameter, of the fan duct outlet. Between the point P1 and the point P2, the extension of the duct in a radial direction of the fan wheel increases progressively. Further, a point P3 exists, wherein the extension, or width, of the portion of the duct extending between the point P3 and the outlet is substantially equal. The point P3 may be arranged downstream with respect to point P2.

Further, the point P3 may define a point wherein no overlap exists between different portions of the fan duct. The extension, or width, of the portion of the duct extending between the point P3 and the outlet is substantially equal.

In one embodiment, the fan wheel is arranged at least partly inside, or within, the fan duct. In one embodiment, the arrangement of the fan wheel 100 may further be described as countersunk, with respect to the fan duct. The fan duct may further be described as self intersecting. In some embodiments, the point P1 may for example be described as arranged within, or inside, the duct. Further, in some embodiment, there exists an overlap between different portions of the fan duct along the axis B.

According to one embodiment, the inlet and the outlet of the fan duct are offset in a direction along the axis A. In one embodiment, the fan duct comprises a first end point and a second opposite end point defined as a centre point of the fan outlet, wherein the first end point and the second end point are offset in a direction along the axis A. In one embodiment, the point P1 and the point P2 are axially offset along the axis A. The inlet of the fan duct, as well as the fan duct as such, may in some embodiments be described as comprising a pitch, i.e. the inlet of the fan duct as well as the fan duct as such comprises a helix type design.

According to one embodiment, the fan duct further comprises a twisted inner structure. Such a structure is designed to influence the flow in the duct, such that a "twisted" flow is induced in the duct. Hereby the efficiency of the fan assembly is further increased.

In one embodiment, the outlet of the duct comprises an increasing cross section as compared to a preceding portion of the duct. In one embodiment, the outlet comprises a cone, or trumpet, shape. Such a shape is particularly advantageous for reduction of noise arising at the outlet.

According to one embodiment, the fan assembly further comprises a motor. The motor is adapted to induce a rotational motion to the fan wheel. Such a motor may for example be a suitable electrical motor. In one embodiment, the fan assembly further comprises suitable transmission means adapted to transmit the force and/or motion from the motor to the fan wheel.

In one embodiment, the fan wheel is arranged such that the motor may be arranged at the inner periphery of the first side and/or the inner periphery of the second side. In one embodiment the first and/or the second side comprise suitable receiving means, such as for example holes. Suitable attachment means for attaching the motor to the fan assembly include a nut and bolt connection.

According to a second aspect of the invention, a heater for heating, ventilation and/or cooling of a compartment of an air craft is provided, said heater comprising a chassis, a heating element, a fan assembly according to any of the preceding claims and means for connecting the outlet of the fan duct to the compartment of an airplane which is to be heated. Other applications include heating, ventilation and/or cooling of warehouses and hangars.

In one embodiment, the heating element is arranged such that the air first passes the heating assembly, i.e. the air is sucked passed the heating element by means of the fan wheel and the fan duct In other words, the heating element is arranged upstream of the fan assembly. Such an embodiment is advantageous since the air expands when heated and hence a higher efficiency is achieved.

In one embodiment, the means for connecting the outlet of the fan duct to the compartment of an air craft which is to be heated comprise a flexible channel, or hose.

In one embodiment, the heating element is an electrical heating element, in some embodiments the electrical element is powered by a battery. In one embodiment, the heating element is a heating element generating heat by means of burning, or combustion, such as a diesel heater.

According to one embodiment, the heater further comprises control means adapted to control the fan assembly and/or the heating element and/or the chassis of the heater. According to one embodiment, the heater further comprises a user interface adapted to allow a user to control the heater and the comprised components by means of the control means.

Further objectives, advantages and features of the heater conceivable within the scope of the second aspect of the invention are readily understood by the foregoing discussion referring to the first aspect of the invention.

According to a third aspect of the invention, a use of a fan assembly according to any of the preceding claims for in a heater for heating, ventilating and/or cooling a compartment of an aircraft s provided. Objectives, advantages and features of the use conceivable within the scope of the third aspect of the invention are readily understood by the foregoing discussion referring to the first and the second aspects of the invention.

Further objectives of, features of and advantages with the present invention will become apparent when studying the following detailed disclosure, the drawings and the appended claims. Those skilled in the art realize that different features of the present invention can be combined to create embodiments other than those described in the following.

### Brief description of the drawings

The invention will be better understood through the following illustrative and non-limiting detailed description of preferred embodiments, with reference to the appended drawing, on which:
Figure 1 is a perspective view of a fan assembly according to an embodiment of the invention;
Figure 2a is a perspective view of a fan wheel according to an embodiment of the invention;
Figure 2b is a perspective view of a fan wheel according to an embodiment of the invention, wherein the second side has been removed;
Figure 2c is a perspective view of a fan wheel according to an embodiment of the invention;
Figure 2d is a top view of a fan wheel according to an embodiment of the invention;
Figure 3 is a side view of the fan duct according to an embodiment of the invention;
Figure 4 is a schematic representation of a heater according to an embodiment of the second aspect of the invention.

All figures are schematic, not necessarily to scale, and generally only show parts which are necessary in order to elucidate the invention, wherein other parts may be omitted or merely suggested.

### Detailed description of embodiments

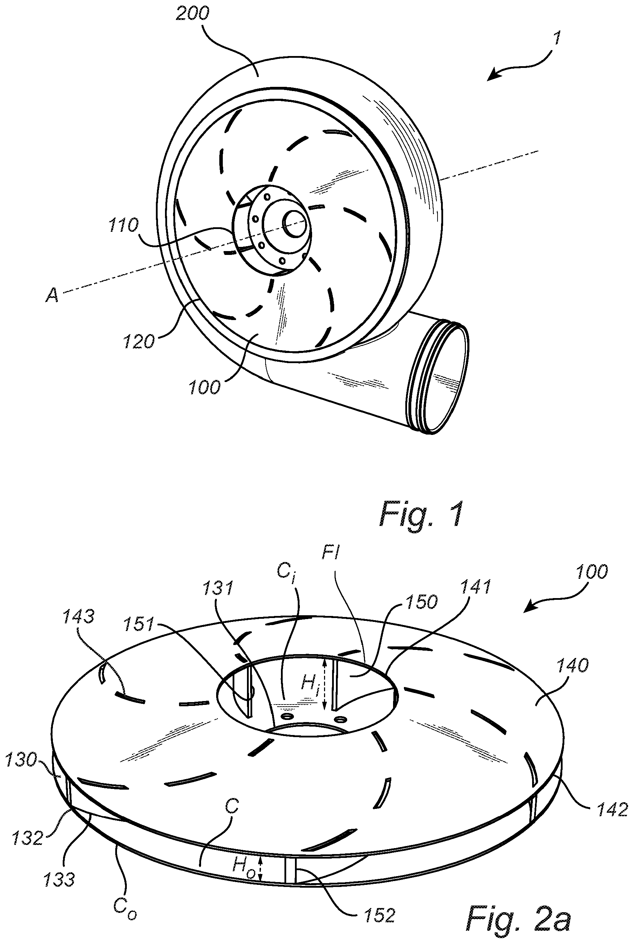

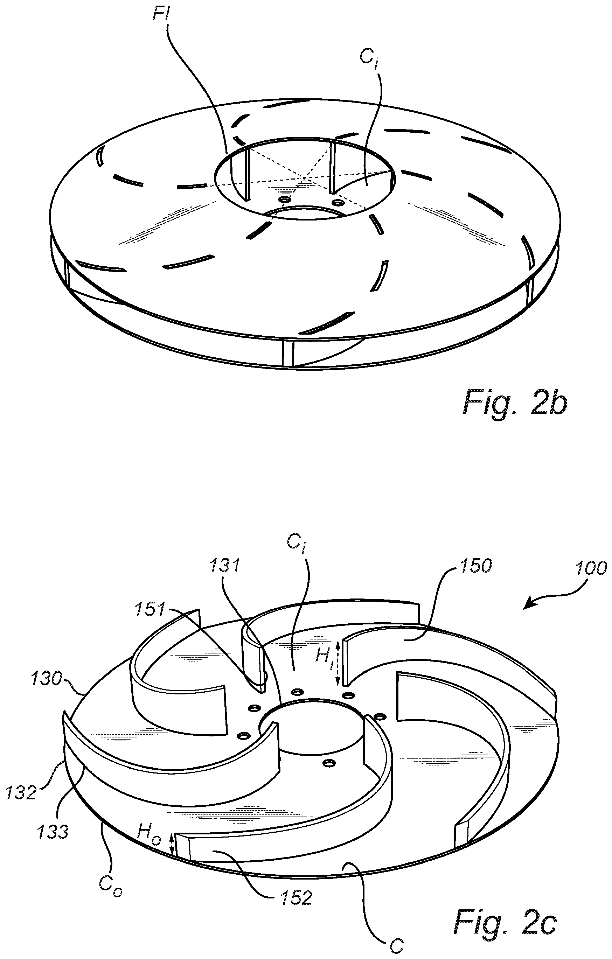

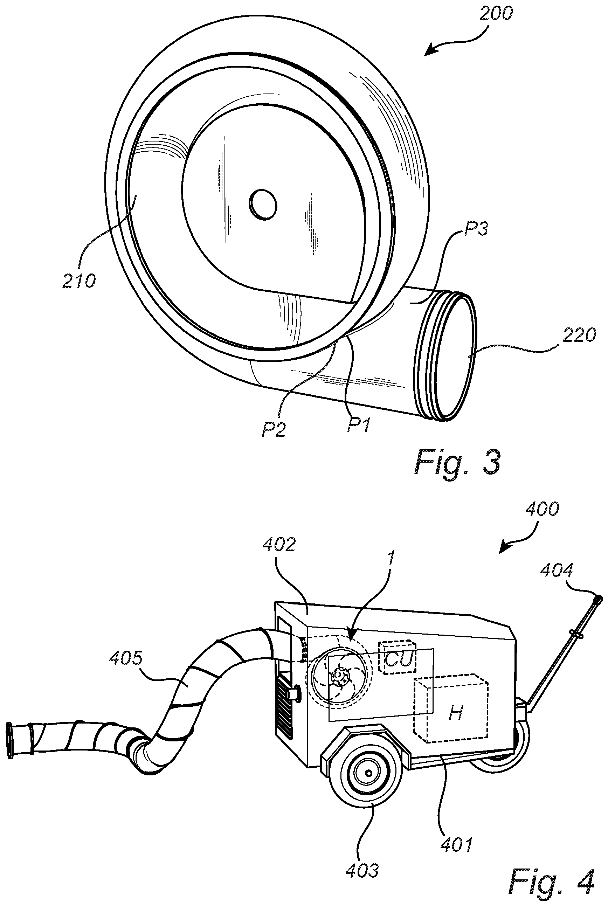

A fan assembly 1 comprising a fan wheel 100 and a fan duct 200 according to the invention is shown in fig.1. The fan wheel 100 is rotatably arranged around the axis A and comprises an inner periphery 110 and an outer periphery 120. The fan duct 200 is arranged around the fan wheel 100, i.e. the fan duct 200 encircles the fan wheel 100. The fan wheel and the fan duct will now be described in greater detail with reference to figures 2a, 2b and 3.

Figure 2a is a perspective view of the fan wheel 100 comprising a first side 130, comprising an inner periphery 131 and an outer periphery 132, and a second side 140 comprising an inner periphery 141 and an outer periphery 142. The first and the second side hereby comprise an annular shape defined by their respective inner and outer peripheries. The first and second sides 130, 140 may also be defined by reference to their respective inner and outer radiuses. A fan inlet FI is defined by the inner periphery 141 of the second side 140.

Curved wings 150, in the illustrated case, six wings, extend between the first and second side 130, 140 and between the inner 141 and outer periphery 142 of the second side 140. Hereby channels C are formed between the wings, the first side and the second side. The inner periphery of the first side 130 is slightly larger than the inner periphery of the second side 140. Accordingly the beginning, or starting point, of the wings 150 is slightly displaced in a radially outward direction with respect to the inner periphery 131 of the first side.

Fig. 2b is a perspective view wherein the second side has been removed, such that the curved wings 150 are shown. Due to the extension of the wings between the first and second side, the height hᵢ of the wings is larger at the end 151 arranged at the inner periphery of the second side as compared to the height hₒ at the end 152 arranged at the outer periphery.

In the illustrated case, the inlet of the channels Cᵢ is formed between the inner edges 151 of two adjacent wings, the portion of the inner periphery 141 of the second side extending between two adjacent wings and the corresponding curve, i.e. a projection of the portion of the inner periphery 141 of the second side onto the first side. In an alternative embodiment wherein the inner peripheries of the first and second side correspond, the inlet of the channels Cᵢ is defined by the edge of two adjacent wings, the portion of the inner periphery 141 of the first side extending between two adjacent wings and the portion of the inner periphery 131 of the first side 130 extending between two adjacent wings.

Further, in the illustrated case, the outlet of the channels Cₒ is formed between the outer edges 152 of two adjacent wings, the portion of the outer periphery 142 of the second side extending between the two adjacent wings and the portion of the outer periphery 132 of the first side extending between two adjacent wings.

The second side 140 comprises a slightly inclined, or sloped, shape, such that a distance Hᵢ defined between the inner periphery 141 of the second side and the first side 130 is larger than the distance Hₒ defined between the outer periphery 142 of the second side and the first side 130. Hereby the area of the inlet of the channels Cᵢ and the area of the outlet of the channels Cₒ are substantially equal.

The first side 130 and the second side 140 each comprise slots, or slits, 133, 143 wherein the curved wings are arranged. The wings may be further joined to the first and second side by means of for example welding.

Fig. 2c is a similar perspective view as in fig 2a, wherein portion, or sectors, of the inlet FI at the inner periphery 141 of the second side 140 has been highlighted. The area of one sector substantially corresponds to the area of the inlet cᵢ of the channel arranged below. I.e. the total inlet FI area corresponds substantially to the combined area of all channel inlets cᵢ.

Accordingly, the area of the fan inlet FI corresponds substantially to total inlet area of the channels, which in turns corresponds to the total outlet area of the channels. In other words, a substantially constant cross sectional area is maintained throughout the flow path.

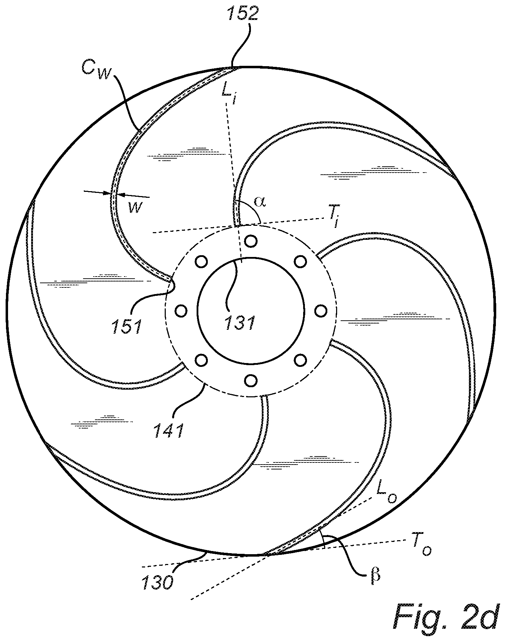

Fig. 2d is a top view of the fan wheel, with the second side 140 removed, showing the angles α and β related to the design of the wings. The angle α is defined between a first end portion 151 of a wing 150, indicated by line Lᵢ, facing the inner peripheries 131, 141 (not shown), and a tangent Tᵢ to the inner periphery 141 (the projection of which is represented by the dotted line) , and is within the range between 20°-45°, preferably wihtin the range between 35°-45°.

The angle β is defined between a second end portion of a wing 152, facing the outer peripheries 132, 142, indicated by line Lₒ, and a tangent Tₒ to the outer periphery 132, and is within the range between 2°-10°, preferably within the range between 4°-6°.

Further, fig. 2d illustrates the width w, or of the wings 150. The wings are curved, and extend along a curve C_{w} and the width w of the wings 150, as defined perpendicular to the curve C_{w} is substantially equal along the extension of the wing. The width w may also be understood as a width of a cross section of the wings in a plane parallel to the first side 130.

Turning to figure 3, the fan duct will be described in more detail. Fig. 3 shows a perspective view of the fan duct 200. The fan duct is adapted to be arranged around, or encircle, the fan wheel 100 (not shown in fig. 3). The fan duct 200 comprises an inlet 210 and an outlet 220, in the illustrated case a substantially circular cross section, an axis B is defined along the direction of the outlet of the fan duct, i.e. normal to a plan defined by the substantially circular outlet of the illustrated fan duct.

The inlet 210 is defined between the outer peripheries of the first side and the second side 140 of the fan wheel, i.e. the inlet 210 of the fan duct comprise a substantially circular, or annular shape, which may be described by the outer, or larger, radius of the first and/or the second side 140 and the height of the inlet 210 being defined by the distance Hₒ between the outer periphery 142 of the second side and the first side 130. Accordingly, the area of the inlet of the fan duct 210 is substantially equal to the total outlet are of the channels of the fan wheel.

With respect to the design, or shape, of the fan duct, the fan duct may be described as encircling the fan wheel 100 starting at a point P1 on the outer periphery of the second side and ending an at point P2, wherein the point P2 is angularly offset by approximately 360°, i.e. the first and second points P1, P2 may be described as a starting point and an end point respectively of a full revolution of the fan wheel.

As shown in fig. 3, the arrangement of the fan wheel 100 may further be described as countersunk or self intersecting. In the illustrated embodiment, point P1 may for example be described as arranged within, or inside, the duct. Further, there exists an overlap between different portions of the fan duct 200 along the axis B.

Yet further, also shown in fig. 3, the first end of the fan duct 200 is offset in a direction along the axis A, such that the inlet and the outlet, and further also point P1 and point P2, are axially offset. As shown in fig. 3, the inlet of the fan duct, as well as the fan duct as such, may in fact be described as comprising a pitch, i.e. the inlet of the fan duct as well as the fan duct as such comprises a helix type design. Accordingly, the duct may be described as comprising a shape having similarities to that of a snake.

At the point P1, i.e. in a sense a starting point of the inlet of the fan duct, the extension of the duct in a radial direction of the wheel is approximately zero. At the point P2, the extension of the fan duct is equal to an extension, or width, E across the outlet of the duct, wherein E is larger than 0. Due to the countersunk arrangement of the fan wheel 100 with respect to the duct 200, the distance E is smaller than the width, or in the illustrated case diameter, of the fan duct outlet. Between the point P1 and the point P2, the radial measurement of the duct increases progressively. Further, a point P3, arrange downstream of point P2, defines a point wherein no overlap exists between different portions of the fan duct 200. The extension, or width, of the portion of the duct extending between the point P3 and the outlet is substantially equal. In the illustrated embodiment, the width of the outlet 220 of the duct 200 corresponds to the radius of the outlet. The width in this sense may further be interpreted as a width defined in a plane to which the axis A is normal.

The fan duct further comprises an internal structure, not shown, intended to create a twisted flow, or to induce a vortex to the flow. Such a structure comprises a twisted, or spiral, shape and is arranged on the inside of the duct.

Figure 4 shows a schematic representation of a heater 400 for heating, ventilating and/or cooling of for example compartments of airplanes according to an embodiment of the second aspect of the invention. The illustrated embodiment of the heater comprises a chassis 401, a roof 402, wheel 403 and a tow bar 404. Hereby the heater may be transported, or towed, by a suitable vehicle to a location where heating is desired. Alternatively, the heater chassis may be placed on a carrier vehicle, accordingly in such an embodiment the heater may not comprise wheels and a tow bar. Suitable materials for the chassis and roof include stainless steel.

The heater, as shown schematically, comprises a fan assembly 1, a heating element H, a control unit CU and a user interface. The heater further comprises an electrical motor for driving the fan. The heating element H, which may be for example a battery powered electrical heating element or a diesel heating element, is arranged upstream of the fan unit.

The heated air is transferred to the location to be heated, for example an airplane, by means of the hose 405. The hose comprise suitable means for connecting the hose to the location to be heated.

While specific embodiments have been described, the skilled person will understand that many modifications, variations and alterations are conceivable within the scope as defined in the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Fan assembly (1) comprising a fan wheel (100) rotatably arranged around an axis (A) in a fan duct (200); said fan wheel comprising:
a first side(130), said first side comprising:
an inner periphery (131) and
an outer periphery (132),
a second side (140), said second side comprising:
an inner periphery (141) forming a fan wheel inlet and
an outer periphery (142)
at least four curved wings (150);
said at least four wings extending between said inner and outer periphery of the second side and said at least four wings extending between said first side and said second side, such that channels (C) are formed between said wings and said first and second side,
said channels comprising:
an inlet (Cᵢ), arranged at said inner periphery of said second side and having a first cross sectional area,
an outlet (Cₒ), arranged at said outer periphery of said second side and having a second cross sectional area, the fan assembly being **characterised in that** the inner periphery of the second side is arranged at a first distance (Hᵢ) along the axis (A) from the first side and the outer periphery of the second side is arranged at a second distance (Hₒ) along the axis (A) from the first side, said first distance (Hᵢ) is larger than the second distance (Hₒ) such that the cross sectional area of the channels at the inlet and the cross sectional area of the channels at the outlet are substantially equal.

2. Fan assembly according to claim 1, wherein the number of wings is within the interval 4-30 wings.

3. Fan assembly according to any of the preceding claims, wherein said wings extend between said inner and outer periphery, such that a straight line extending in a radial direction from the axis (A) to any point on the outer periphery intersects at least one wing.

4. Fan assembly according to any of the preceding claims, wherein a respective cross sectional area along the channels is substantially constant.

5. Fan assembly according to any of the preceding claims, wherein the wings extend between said inner and outer periphery along a curve and comprise a constant width along an axis (W) perpendicular to the curve.

6. Fan assembly according to any of the preceding claims, wherein an angle (α) defined between a first end portion of a wing, facing the inner periphery, and a tangent to the inner periphery, is within the range between 20°-45°, preferably within the range between 35°-45°.

7. Fan assembly according to any of the preceding claims, wherein an angle (β) defined between a second end portion of a wing, facing the outer periphery, and a tangent to the outer periphery, is within the range between 2°-10°, preferably within the range between 4°-6°.

8. Fan assembly according to any of the preceding claims, wherein said fan duct comprises an inlet (210) and an outlet (220), and wherein the inlet of said fan duct is defined between said outer periphery of said fan first side and said outer periphery of said second side.

9. Fan assembly according to any of the preceding claims, wherein the area of the inlet of the fan duct is substantially equal to the total outlet are of the channels.

10. Fan assembly according to any of the preceding claims, wherein the inlet of the fan duct is arranged to encircle the fan wheel.

11. Fan assembly according to claim 9, wherein the inlet of the fan duct encircles the fan wheel starting at a point P1 on the outer periphery and ending at a point P2 on the outer periphery, wherein point P2 is angularly offset approximately 360° with respect to point P1, and wherein the extension of the fan duct in a radial direction of the fan wheel, is substantially zero at the point P1 of the fan duct and progressively increases around the fan wheel to be substantially equal to the width across the outlet of the fan duct at point P2.

12. Fan assembly according to any of the preceding claims, wherein the fan duct further comprises a twisted inner structure.

13. Fan assembly according to any of the preceding claims, wherein the fan assembly further comprises a motor.

14. Heater (400) for heating, cooling and/or ventilation of a compartment of an air craft, said heater comprising a chassis (401), a heating element (H), a fan assembly (1) according to any of the preceding claims and means (405) for connecting the outlet of the fan duct to the compartment of an air craft which is to be heated.

15. Use of a fan assembly according to any of the preceding claims 1-13 in a heater for heating, cooling and/or ventilation of a compartment of an air craft.

## Patentansprüche

1. Lüfteranordnung (1), umfassend ein Lüfterrad (100), das drehbar um eine Achse (A) in einem Lüfterkanal (200) angeordnet ist;
Lüfterrad, umfassend:
eine erste Seite (130), wobei diese erste Seite umfasst:
einen Innenumfang (131) und
einen Außenumfang (132),
eine zweite Seite (140), wobei diese zweite Seite umfasst:
einem Innenumfang (141), der einen Lüfterradeinlass bildet und
einen Außenumfang (142),
mindestens vier gebogene Flügel (150);
die mindestens vier Flügel, die sich zwischen dem Innen- und Außenumfang der zweiten Seite erstrecken, und die mindestens vier Flügel, die sich zwischen der ersten Seite und der zweiten Seite erstrecken, so dass Kanäle (C) zwischen den Flügeln und der ersten und zweiten Seite gebildet werden,
Kanäle, umfassend:
einen Einlass (Cᵢ), der am Innenumfang der zweiten Seite angeordnet ist und eine erste Querschnittsfläche aufweist,
einen Auslass (Cₒ), der an dem Außenumfang der zweiten Seite angeordnet ist und eine zweite Querschnittsfläche aufweist,
wobei die Lüfteranordnung **dadurch gekennzeichnet ist, dass** der Innenumfang der zweiten Seite in einem ersten Abstand (Hᵢ) entlang der Achse (A) von der ersten Seite angeordnet ist und der Außenumfang der zweiten Seite in einem zweiten Abstand (Hₒ) entlang der Achse (A) von der ersten Seite angeordnet ist, der erste Abstand (Hᵢ) größer als der zweite Abstand (Hₒ) ist, so dass die Querschnittsfläche der Kanäle am Einlass und die Querschnittsfläche der Kanäle am Auslass im Wesentlichen gleich sind.

2. Lüfteranordnung nach Anspruch 1, wobei die Anzahl der Flügel innerhalb des Intervalls 4-30 Flügel liegt.

3. Lüfteranordnung nach einem der vorhergehenden Ansprüche, wobei sich die Flügel zwischen dem Innen- und dem Außenumfang erstrecken, so dass eine gerade Linie, die sich in radialer Richtung von der Achse (A) zu einem beliebigen Punkt auf dem Außenumfang erstreckt, mindestens einen Flügel schneidet.

4. Lüfteranordnung nach einem der vorhergehenden Ansprüche, wobei die jeweilige Querschnittsfläche entlang der Kanäle im Wesentlichen konstant ist.

5. Lüfteranordnung nach einem der vorhergehenden Ansprüche, wobei sich die Flügel zwischen dem Innen- und Außenumfang entlang einer Kurve erstrecken und eine konstante Breite entlang einer Achse (W) senkrecht zur Kurve umfassen.

6. Lüfteranordnung nach einem der vorhergehenden Ansprüche, wobei ein Winkel (a), der zwischen einem ersten Endabschnitt eines Flügels, der dem Innenumfang zugewandt ist, und einer Tangente an den Innenumfang definiert ist, innerhalb des Bereichs zwischen 20°-45°, vorzugsweise innerhalb des Bereichs zwischen 35°-45°, liegt.

7. Lüfteranordnung nach einem der vorhergehenden Ansprüche, wobei ein Winkel (ß), der zwischen einem zweiten Endabschnitt eines Flügels, der dem Außenumfang zugewandt ist, und einer Tangente an den Außenumfang definiert ist, innerhalb des Bereichs zwischen 2°-10°, vorzugsweise innerhalb des Bereichs zwischen 4°-6°, liegt.

8. Lüfteranordnung nach einem der vorhergehenden Ansprüche, wobei der Lüfterkanal einen Einlass (210) und einen Auslass (220) umfasst und wobei der Einlass des Lüfterkanals zwischen dem Außenumfang der ersten Seite des Lüfters und dem Außenumfang der zweiten Seite definiert ist.

9. Lüfteranordnung nach einem der vorhergehenden Ansprüche, wobei die Fläche des Einlasses des Lüfterkanals im Wesentlichen gleich der Gesamtfläche des Auslasses der Kanäle ist.

10. Lüfteranordnung nach einem der vorhergehenden Ansprüche, wobei der Einlass des Lüfterkanals so angeordnet ist, dass er das Lüfterrad umgibt.

11. Lüfteranordnung nach Anspruch 9, bei der Einlass des Lüfterkanals das Lüfterrad umgibt, wobei der Einlass des Lüfterkanals an einem Punkt P1 am Außenumfang beginnt und an einem Punkt P2 am Außenumfang endet, wobei der Punkt P2 gegenüber dem Punkt P1 um etwa 360° winkelversetzt ist, und wobei die Ausdehnung des Lüfterkanals in radialer Richtung des Lüfterrades am Punkt P1 des Lüfterkanals im Wesentlichen Null ist und um das Lüfterrad herum fortschreitend zunimmt, um im Wesentlichen gleich der Breite über den Auslass des Lüfterkanals am Punkt P2 zu sein.

12. Lüfteranordnung nach einem der vorhergehenden Ansprüche, wobei der Lüfterkanal ferner eine verdrehte innere Struktur umfasst.

13. Lüfteranordnung nach einem der vorhergehenden Ansprüche, wobei die Lüfteranordnung ferner einen Motor umfasst.

14. Heizvorrichtung (400) zum Heizen, Kühlen und/oder Belüften eines Abteils eines Luftfahrzeugs, wobei die Heizvorrichtung ein Chassis (401), ein Heizelement (H), eine Lüfteranordnung (1) nach einem der vorhergehenden Ansprüche und Mittel (405) zum Verbinden des Auslasses der Lüfterleitung mit dem zu beheizenden Abteil eines Luftfahrzeugs umfasst.

15. Verwendung einer Lüfteranordnung nach einem der vorhergehenden Ansprüche 1-13 in einer Heizvorrichtung zum Heizen, Kühlen und/oder Belüften eines Raumes eines Luftfahrzeuges.

## Revendications

1. Ensemble de ventilateur (1) comprenant une roue de ventilateur (100) disposée de façon rotative autour d'un axe (A) dans un conduit de ventilateur (200) ;
ladite roue de ventilateur comprenant :
un premier côté (130), ledit premier côté comprenant :
une périphérie intérieure (131) et
une périphérie extérieure (132),
un deuxième côté (140), ledit deuxième côté comprenant :
une périphérie intérieure (141) formant une entrée de roue de ventilateur, et
une périphérie extérieure (142),
au moins quatre ailes incurvées (150) ;
lesdites au moins quatre ailes s'étendant entre lesdites périphéries intérieure et extérieure du deuxième côté et lesdites au moins quatre ailes s'étendant entre ledit premier côté et ledit deuxième côté, de telle façon que des canaux sont formés entre lesdites ailes et lesdits premier et deuxième côtés,
lesdits canaux comprenant :
une entrée (Cᵢ) disposée au niveau de ladite périphérie intérieure dudit deuxième côté et présentant une première aire de section transversale,
une sortie (Cₒ) disposée au niveau de ladite périphérie extérieure dudit deuxième côté et présentant une deuxième aire de section transversale,
l'ensemble de ventilateur étant **caractérisé en ce que** la périphérie intérieure du deuxième côté est disposée à une première distance (Hᵢ) le long de l'axe (A) par rapport au premier côté et la périphérie extérieure du deuxième côté est disposée à une deuxième distance (Hₒ) le long de l'axe (A) par rapport au premier côté, ladite première distance (Hᵢ) étant supérieure à la deuxième distance (Hₒ), de sorte que l'aire de section transversale des canaux au niveau de l'entrée et l'aire de section transversale des canaux au niveau de la sortie sont substantiellement égales.

2. Ensemble de ventilateur selon la revendication 1, dans lequel le nombre d'ailes est compris entre 4 et 30 ailes.

3. Ensemble de ventilateur selon l'une quelconque des revendications précédentes, dans lequel lesdites ailes s'étendent entre lesdites périphéries intérieure et extérieure, de telle façon qu'une ligne droite s'étendant dans une direction radiale par rapport à l'axe (A) vers n'importe quel point sur la périphérie extérieure coupe au moins une aile.

4. Ensemble de ventilateur selon l'une quelconque des revendications précédentes, dans lequel une aire de section transversale respective le long des canaux est substantiellement constante.

5. Ensemble de ventilateur selon l'une quelconque des revendications précédentes, dans lequel les ailes s'étendent entre lesdites périphéries intérieure et extérieure le long d'une courbe et comprennent une largeur constante le long d'un axe (W) perpendiculaire à la courbe.

6. Ensemble de ventilateur selon l'une quelconque des revendications précédentes, dans lequel un angle (α) défini entre une première partie d'extrémité d'une aile tournée vers la périphérie intérieure et une tangente à la périphérie intérieure est compris dans la plage de 20° à 45°, de préférence dans la plage de 35° à 45°.

7. Ensemble de ventilateur selon l'une quelconque des revendications précédentes, dans lequel un angle (β) défini entre une deuxième partie d'extrémité d'une aile tournée vers la périphérie extérieure et une tangente à la périphérie extérieure est compris dans la plage de 2° à 10°, de préférence dans la plage de 4° à 6°.

8. Ensemble de ventilateur selon l'une quelconque des revendications précédentes, dans lequel ledit conduit de ventilateur comprend une entrée (210) et une sortie (220), et dans lequel l'entrée dudit conduit de ventilateur est définie entre ladite périphérie extérieure dudit premier côté de ventilateur et ladite périphérie extérieure dudit deuxième côté.

9. Ensemble de ventilateur selon l'une quelconque des revendications précédentes, dans lequel l'aire de l'entrée du conduit de ventilateur est substantiellement égale à l'aire de sortie totale des canaux.

10. Ensemble de ventilateur selon l'une quelconque des revendications précédentes, dans lequel l'entrée du conduit de ventilateur est conçue de manière à encercler la roue de ventilateur.

11. Ensemble de ventilateur selon la revendication 9, dans lequel l'entrée du conduit de ventilateur encercle la roue de ventilateur à partir d'un point P1 sur la périphérie extérieure jusqu'à un point P2 sur la périphérie extérieure, dans lequel le point P2 est décalé angulairement d'approximativement 360° par rapport au point P1, et dans lequel l'extension du conduit de ventilateur dans une direction radiale de la roue de ventilateur est substantiellement égale à zéro au point P1 du conduit de ventilateur et augmente progressivement autour de la roue de ventilateur pour être substantiellement égale à la largeur à travers la sortie du conduit de ventilateur au point P2.

12. Ensemble de ventilateur selon l'une quelconque des revendications précédentes, dans lequel le conduit de ventilateur comprend en outre une structure intérieure torsadée.

13. Ensemble de ventilateur selon l'une quelconque des revendications précédentes, dans lequel l'ensemble de ventilateur comprend en outre un moteur.

14. Chauffage (400) pour le chauffage, le refroidissement et/ou la ventilation d'un compartiment d'un avion, ledit chauffage comprenant un châssis (401), un élément chauffant (H), un ensemble de ventilateur (1) selon l'une quelconque des revendications précédentes et un moyen (405) permettant de relier la sortie du conduit de ventilateur au compartiment d'un avion à chauffer.

15. Utilisation d'un ensemble de ventilateur selon l'une quelconque des revendications 1 à 13 dans un chauffage pour le chauffage, le refroidissement et/ou la ventilation d'un compartiment d'un avion.
